# EUROPEAN PATENT SPECIFICATION

(11) **EP 2 515 635 B1**
(45) Date of publication and mention of the grant of the patent: **29.05.2013**
(21) Application number: 09717562.4
(22) Date of filing: 25.02.2009
(51) Int. Cl.: A01K 39/012

(54) **FEEDING APPARATUS COMPRISING A FEED SUPPLY LINE WITH FEED PANS**
FÜTTERVORRICHTUNG MIT FUTTERZULEITUNG MIT FUTTERSCHALEN
APPAREIL D'ALIMENTATION COMPORTANT UNE LIGNE D'AMENÉE D'ALIMENTS ET DES MANGEOIRES

(30) Priority: 25.02.2008 NL 2001319
(43) Date of publication of application: 31.10.2012
(73) Proprietor: Van de Ven Beheer B.V., 5521 DZ Eersel (NL)
(72) Inventor: VAN DE VEN, NL-5521 DZ Eersel (NL)
(74) Representative: Verhees, Godefridus Josephus Maria
(86) International application number: PCT/NL2009/000045
(87) International publication number: WO 2009/110785

(56) References cited:
- DE-U- 8 806 165
- FR-A- 2 801 766
- US-A- 3 105 463
- US-A- 5 275 131

## Description

### Field of the invention.

The invention relates to a feeding apparatus comprising a feed supply line with a feed pipe provided with exit openings, feed conveyor means for conveying feed through the feed pipe, feed pans suspended from the feed pipe below the exit openings and provided with exit openings in the side walls through which hens or cocks can reach the feed present in the feed pans, valves located between the exit openings in the feed pipe and the feed pans, and control means for opening and closing the valves.

The invention more particularly relates to a feeding apparatus in the reproduction sector (production of fertilized eggs) where both hens and cocks are present in a living space. In order to manage the animals well it is essential for the portions of feed for the hens to be managed differently from those for the cocks.

### State of the art.

A feeding apparatus of this type is generally known. The known feeding apparatus has two feed supply lines, one for the hens and one for the cocks. The feed supply line for the hens is present at a lower level than that for the cocks, so that the feed pans for the hens are present at a smaller distance from the floor than those for the cocks.

The feed supply lines have separate control means, which control means of a feed supply line simultaneously control all feed buffers in the respective feed supply line.

A disadvantage of the known feeding apparatus is the fact that it requires much room due to the presence of two separate feed supply lines.

Feeding pans preventing female hens from eating are known from US-A-5275131.

### Summary of the invention.

It is an object of the invention to provide a feeding apparatus of the type defined in the opening paragraph for both hens and cocks, which requires less space than the known feeding apparatus and, as a result, leaves more space to the animals. For this purpose the feeding apparatus according to the invention is characterised in that the feed pans comprise first and second feed pans, the first feed pans hanging lower than the second feed pans. By hanging feed pans for hens lower than feed pans for cocks in one feed supply line, it will suffice to have one feed supply line for feeding both hens and cocks, so that the feeding apparatus requires less space than a feeding apparatus that requires two separate feed supply lines.

An embodiment of the feeding apparatus according to the invention is characterised in that the feed pans are exchangeable. Optionally, first or second feed pans can be suspended from the feed pipe in the place of the exit openings. Even after the feeding apparatus has been installed in a hen house the feed pans can be readily exchanged by the user.

The first feed pans are preferably higher than the second feed pans, so that they are present at a lower level if they are suspended both from the same feed pipe.

The first feed pans preferably have smaller openings than the second feed pans while the height and width of the openings in the first feed pans are smaller than the height and width of the openings in the second feed pans. Cocks have a thicker head and, as a result, cannot reach through the narrower openings of the first feed pans or can reach through them with greater difficulty. In addition, the cocks would hit their comb against the lower openings, which would hurt. Consequently, the cocks will not eat from the feed pans that hang lower and are intended for the hens. But conversely, the hens cannot reach the cock feed pans hanging higher or can reach them only with great difficulty, so that they will eat only from the feed pans hanging lower.

An embodiment of the feeding apparatus according to the invention is characterised in that the control means can control the valves above the first feed pans independently of the valves above the second feed pans. As a result, the portions of feed for the first feed pans can be managed differently from those for the second feed pans, so that the quantities of feed for hens and cocks can be set independetly of each other.

A further embodiment of the feeding apparatus according to the invention is characterised in that the control means first open the valves above the first feed pans and subsequently the valves above the second feed pans. In consequence, feed is offered first to the hens and afterwards to the cocks. So doing the hens are already partly supplied with feed when feed is offered to the cocks, so that this diminishes the chance of hens pecking from the second feed pans.

A still further embodiment of the feeding apparatus according to the invention is characterised in that feed buffers are present between the exit openings and the valves.

For cleaning down these buffers and feed pans in a simple manner, preferably openings are present near the top of the feed buffers for injecting rinse water through the feed buffers. The openings are situated for example in the side wall of the feed buffers near the top of the feed buffers or are formed by leaving the feed buffers open at the top.

The rinse water injected into the feed buffers through these openings flows into the feed pans through the valves. Since the bottom of the feed pans is deformable and can be pulled out downwards, the rinse water can be discharged in a simple manner.

Yet another embodiment of the feeding apparatus according to the invention is characterised in that the feeding apparatus comprises slides for partly or completely shutting off the exit openings. By partly shutting off the exit openings less feed can end up in the buffers, so that the portions are reduced. By completely shutting off one or more slides, parts of the poultry house cannot be provided with feed as a result of which the animals are lured to another poultry house. This may be desired, for example, if one wishes to cut off part of the poultry house to animals and the animals first have to be removed from this part.

To better regulate the size of the exit openings, the exit openings are preferably located in pairs side by side in the feed pipe, with a feed pan hanging below each pair of exit openings and each exit opening being individually shut off by a slide.

A still further embodiment of the feeding apparatus according to the invention is characterised in that each slide is attached to a bellows which is connected to a vacuum pipe. Vacuum controlling the valves provides a relatively trouble-free feeding apparatus.

It should be observed that a feeding apparatus comprising vacuum operated valves can also be used for other feeding apparatus than the feeding apparatus described hereinbefore with feed pans at different levels. Each feeding apparatus comprising valves for opening and shutting off connections between a feed pipe and feed pans can be arranged to have these vacuum operated valves.

The feeding apparatus preferably comprises two parallel vacuum pipes with the first feed pans being connected to one of the vacuum pipes and the second feed pans being connected to the other vacuum pipe.

For exchanging the feed pans in a simple manner without the need to rearrange the vacuum pipes, each feed pan preferably comprises two channels with two ends each to which sections of the vacuum pipes can be connected, one of the channels having an opening between the ends to which opening the bellows is connected while the side walls between the ends of the other channel are closed.

### Brief description of the drawings.

The following description relating to the appended drawings, the whole given by way of non-limiting example of the feeding apparatus according to the invention, will provide better understanding of how the invention can be realised, in which:
Fig. 1 shows a side view of a part of an embodiment of the feeding apparatus according to the invention;
Fig. 2 shows a longitudinal view of the feeding apparatus shown in Fig. 1;
Fig. 3 shows a plan view of the feeding apparatus shown in Fig. 1;
Fig. 4 shows a detail of the feeding apparatus in the place of a valve; and
Fig. 5 shows a detail of the feed pipe in the place of a pair of exit openings.

### Detailed description of the drawings

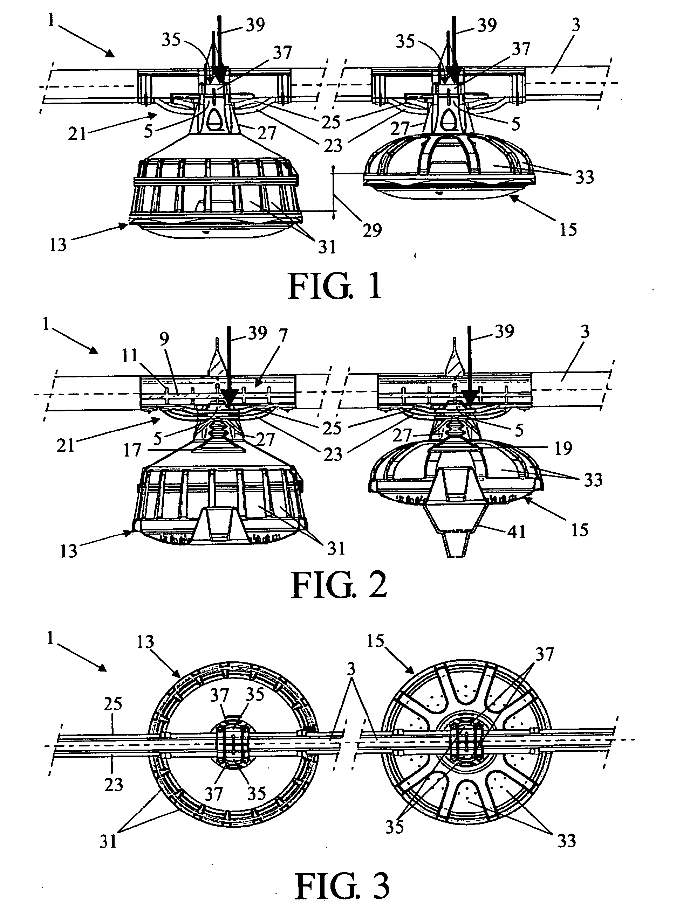

Figs. 1, 2 and 3 show an embodiment of the feeding apparatus according to the invention in a side view, longitudinal view and plan view respectively. The feeding apparatus 1 has only one feed supply line. The feed supply line comprises a feed pipe 3 which has exit openings 5, as well as feed conveyor means 7 (see Fig. 2) for conveying feed through the feed pipe. The feed conveyor means 7 comprise a conveyor chain 9 (see Fig. 2) running through the feed pipe 3, which conveyor chain 9 has vertical blades 11 which are situated at right angles to the conveyor chain. The feed supply line further includes first and second feed pans 13 and 15 which are suspended from the feed pipe 3 below the exit openings 5.

Valves 17 and 19 (see Fig. 2) are provided between the exit openings 5 in the feed pipe and the feed pans 13 and 15, which valves can be opened and closed by means of control means 21. The control means have two separate systems, one for the valves 17 above the first feed pans 13 and one for the valves 19 above the second feed pans 15, so that the valves 17 above the first feed pans can be controlled independently of the valves 19 above the second feed pans 15. Each system has a vacuum pipe 23, 25 through which the valves are operated. Low pressure keeps the valves 17 and 19 in closed position. When the low pressure drops out, the valves change to the open position (the position represented in Fig. 2).

Feed buffers 27 are present between the exit openings 5 and the valves 17, 19. The opening of the valves provides that the contents of the feed buffers 27 drop into the feed pans. Each time relatively small portions of feed are then dropped into the pan. In addition, it is possible for the interval between the dropping times of the feed to be set. As a result, the quantity of feed in the feed pans can be kept small. This provides less selective feed intake and less feed spillage.

The first feed pans 13 are hanging a distance 29 (see Fig. ) of approximately 8 cm lower than the second feed pans 15 because the first feed pans are higher than the second feed pans. The feed pans 13 and 15 are provided with openings 31, 33 in the side walls through which hens or cocks respectively can reach the feed present in the feed pans. The openings 31 in the first feed pans are smaller than the openings 33 in the second feed pans 15, the height and width of the openings 31 in the first feed pans 13 being smaller than the height and width of the openings 33 in the second feed pans 15.

The control means 21 first open the valves 17 above the first feed pans 13 and subsequently the valves 19 above the second feed pans 15, so that first the hens are going to eat from the feed pans 13 hanging lower and then the cocks are going to eat from the feed pans 15 hanging higher. The portions of feed for the two different feed pans can be set independently of each other. As a result, the quantity of feed for the hens and for the cocks can be set separately.

The feed buffers 27 are open at the top. For cleaning the feed pans 13 and 15 it is possible for water to be injected into the feed buffers through openings 35 between the wall 37 of the feed buffers 27 and the feed pipe 3. The direction of the water jet is indicated by means of arrow 39. The water can then flow into the feed pans through the valves 17. Since the bottom 31 of the feed pans 13 and 15 is deformable and can be pulled out downwards to the position shown in Fig. 2 by broken lines, the rinse water can be discharged in a simple manner. For cleaning the feed pans 13 and 15 it is thus not necessary to disengage them from the feed pipe or keep them at an inclined position to let the water flow out.

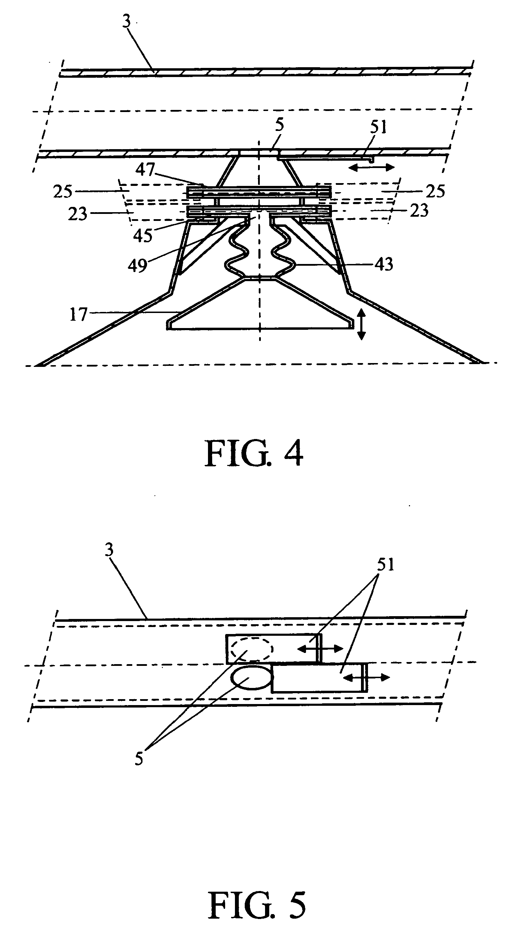

Fig. 4 shows a detail of the feeding apparatus in the place of a valve. The valve 17 is attached to a bellows 43 which is connected to one of the vacuum pipes 23. Each feed pan has two channels 45 and 47 with two ends each to which sections of the vacuum pipes 23 and 25 can be connected. One of the channels 45 has an opening 49 to which the bellows 43 is connected and the side walls between the ends of the other channel 47 are closed to connect sections of the other vacuum pipe 25 to each other. Thanks to the presence of these channels it is possible for the feed pans to be connected to the vacuum pipes and be disconnected from them, which simplifies the exchanging of the different feed pans and the valve of one feed pan can be simply connected to one or another vacuum pipe.

Fig. 5 shows a bottom view of a detail of the feed pipe 3 in the place of a pair of exit openings 5. The feed pan hanging below the exit openings is left out here. The feeding apparatus has slides 51 with which the exit openings 5 can be closed off manually independent of each other. By closing either of the exit openings 5, less feed can drop into the buffers hanging below it, so that the portions can be diminished.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A feeding apparatus comprising a feed supply line with a feed pipe provided with exit openings, feed conveyor means for conveying feed through the feed pipe, feed pans suspended from the feed pipe below the exit openings and provided with exit openings in the side walls through which hens or cocks can reach the feed present in the feed pans, valves located between the exit openings in the feed pipe and the feed pans, and control means for opening and closing the valves, **characterised in that** the feed pans comprise first and second feed pans, the first feed pans hanging lower than the second feed pans.

2. A feeding apparatus as claimed in claim 1, **characterised in that** the feed pans are exchangeable.

3. A feeding apparatus as claimed in claim 1 or 2, **characterised in that** the first feed pans are higher than the second feed pans.

4. A feeding apparatus as claimed in claim 1, 2 or 3, **characterised in that** the first feed pans have smaller openings than the second feed pans while the height and width of the openings in the first feed pans are smaller than the height and width of the openings in the second feed pans.

5. A feeding apparatus as claimed in any one of the preceding claims, **characterised in that** the control means can control the valves above the first feed pans independently of the valves above the second feed pans.

6. A feeding apparatus as claimed in claim 5, **characterised in that** the control means first open the valves above the first feed pans and subsequently the valves above the second feed pans.

7. A feeding apparatus as claimed in any one of the preceding claims, **characterised in that** feed buffers are present between the exit openings and the valves.

8. A feeding apparatus as claimed in claim 7, **characterised in that** openings for injecting rinse water are present near the top of the feed buffers.

9. A feeding apparatus as claimed in claim 8, **characterised in that** openings are present in the side wall of the feed buffers near the top of the feed buffers or **in that** the openings are formed by leaving the feed buffers open at the top.

10. A feeding apparatus as claimed in any one of the preceding claims, **characterised in that** the feeding apparatus comprises slides for completely or partly shutting off the exit openings.

11. A feeding apparatus as claimed in claim 10, **characterised in that** the exit openings are located in pairs side by side in the feed pipe, with a feed pan hanging below each pair of exit openings and each exit opening being individually shut off by a slide.

12. A feeding apparatus as claimed in any one of the preceding claims, **characterised in that** each valve is attached to a bellows which is connected to a vacuum pipe.

13. A feeding apparatus as claimed in claim 12, **characterised in that** the feeding apparatus comprises two parallel vacuum pipes with the first feed pans being connected to one of the vacuum pipes and the second feed pans being connected to the other vacuum pipe.

14. A feeding apparatus as claimed in claim 13, **characterised in that** each feed pan comprises two channels with two ends each to which sections of the vacuum pipes can be connected, one of the channels having an opening between the ends, to which opening the bellows is connected while the side walls between the ends of the other channel are closed.

## Patentansprüche

1. Fütterungseinrichtung mit einer Fütterungsanlage, die ein Futterrohr umfasst, das mit Auslauföffnungen, mit Futterfördermitteln für die Förderung von Futtermitteln durch das Futterrohr, mit unter den Auslauföffnungen an dem Futterrohr aufgehängten Futterwannen mit seitlichen Öffnungen, durch die Hennen oder Hähne an das in den Futterwannen vorhandene Futter gelangen können, mit zwischen den Auslauföffnungen des Futterrohrs und den Futterwannen angeordneten Klappen sowie mit Steuermitteln zum Öffnen und Schließen der Klappen versehen ist, **dadurch gekennzeichnet, dass** die Futterwannen erste und zweite Futterwannen umfassen, wobei die ersten Futterwannen tiefer hängen als die zweiten Futterwannen.

2. Fütterungseinrichtung nach Anspruch 1, **dadurch gekennzeichnet, dass** die Futterwannen austauschbar sind.

3. Fütterungseinrichtung nach einem der Ansprüche 1 oder 2, **dadurch gekennzeichnet, dass** die ersten Futterwannen höher angeordnet sind als die zweiten Futterwannen.

4. Fütterungseinrichtung nach einem der Ansprüche 1, 2 oder 3, **dadurch gekennzeichnet, dass** die ersten Futterwannen kleinere Öffnungen aufweisen als die zweiten Futterwannen, wobei die Höhe und Breite der Öffnungen in den ersten Futterwannen geringer ist als die der Öffnungen in den zweiten Futterwannen.

5. Fütterungseinrichtung nach einem der vorangegangenen Ansprüche, **dadurch gekennzeichnet, dass** die über den ersten Futterwannen angeordneten Klappen unabhängig von den über den zweiten Futterwannen angeordneten Klappen von den Steuermitteln gesteuert werden können.

6. Fütterungseinrichtung nach Anspruch 5, **dadurch gekennzeichnet, dass** zuerst die über den ersten Futterwannen angeordneten Klappen und danach die über den zweiten Futterwannen angeordneten Klappen von den Steuermitteln geöffnet werden.

7. Fütterungseinrichtung nach einem der vorangegangenen Ansprüche, **dadurch gekennzeichnet, dass** sich zwischen den Auslauföffnungen und den Klappen Futterkammern befinden.

8. Fütterungseinrichtung nach Anspruch 7, **dadurch gekennzeichnet, dass** in der Nähe der Oberseite der Futterkammern Öffnungen vorhanden sind, durch die Spülwasser zugeführt werden kann.

9. Fütterungseinrichtung nach Anspruch 8, **dadurch gekennzeichnet, dass** die Öffnungen der Futterkammern in deren Seitenwand in der Nähe der Oberseite angeordnet sind, oder dass die Öffnungen dadurch gebildet werden, dass die Oberseite der Futterkammern offen bleibt.

10. Fütterungseinrichtung nach einem der vorangegangenen Ansprüche, **dadurch gekennzeichnet, dass** die Fütterungseinrichtung Schieber umfasst, mit denen sich die Auslauföffnungen ganz oder teilweise schließen lassen.

11. Fütterungseinrichtung nach Anspruch 10, **dadurch gekennzeichnet, dass** die Auslauföffnungen des Futterrohrs paarweise nebeneinander angeordnet sind, wobei sich unter jedem Paar von Auslauföffnungen eine Futterwanne befindet und jede Auslauföffnung separat von einem Schieber geschlossen werden kann.

12. Fütterungseinrichtung nach einem der vorangegangenen Ansprüche, **dadurch gekennzeichnet, dass** jede Klappe an einem Balgen befestigt ist, der an eine Unterdruckleitung angeschlossen ist.

13. Fütterungseinrichtung nach Anspruch 12, **dadurch gekennzeichnet, dass** die Fütterungseinrichtung zwei parallele Unterdruckleitungen umfasst, wobei die ersten Futterwannen an eine der Unterdruckleitungen und die zweiten Futterwannen an die andere Unterdruckleitung angeschlossen sind.

14. Fütterungseinrichtung nach Anspruch 13, **dadurch gekennzeichnet, dass** jede Futterwanne mit zwei Kanälen versehen ist, von denen jeder über zwei Stutzen verfügt, an die Teile der Unterdruckleitungen angeschlossen werden können, wobei einer der Kanäle zwischen den Stutzen mit einer Öffnung versehen ist, an die der Balgen angeschlossen ist, und die Seitenwände zwischen den Stutzen des anderen Kanals geschlossen sind.

## Revendications

1. Dispositif pour nourrir les animaux pourvu d'une ligne de nourriture comprenant un tuyau de nourriture pourvu de trous d'évacuation, des moyens de transport de nourriture pour transporter la nourriture à travers le tuyau de nourriture, des mangeoires accrochées au tuyau de nourriture sous les trous d'évacuation et pourvues d'ouvertures dans leurs parois latérales par l'intermédiaire desquelles des poules ou des coqs peuvent accéder à la nourriture se trouvant dans les mangeoires, des clapets présents entre les trous d'évacuation du tuyau de nourriture et les mangeoires, et des moyens de guidage pour ouvrir et fermer les clapets, **caractérisé en ce que** les mangeoires comprennent des premières et des deuxièmes mangeoires où les premières mangeoires pendent plus bas que les deuxièmes mangeoires.

2. Dispositif pour nourrir les animaux selon la revendication 1, **caractérisé en ce que** les mangeoires sont permutables.

3. Dispositif pour nourrir les animaux selon la revendication 1 ou 2, **caractérisé en ce que** les premières mangeoires se situent plus haut que les deuxièmes mangeoires.

4. Dispositif pour nourrir les animaux selon la revendication 1, 2 ou 3, **caractérisé en ce que** les premières mangeoires ont des ouvertures plus petites que les deuxièmes mangeoires, où la hauteur et la largeur des ouvertures dans les premières mangeoires sont plus petites que celles dans les deuxièmes mangeoires.

5. Dispositif pour nourrir les animaux selon une des revendications précédentes, **caractérisé en ce que** les moyens de guidage peuvent guider les clapets se trouvant au-dessus des premières mangeoires indépendamment des clapets se trouvant au-dessus des deuxièmes mangeoires.

6. Dispositif pour nourrir les animaux selon la revendication 5, **caractérisé en ce que** les moyens de guidage ouvrent d'abord les clapets se trouvant au-dessus des premières mangeoires et ensuite celles se trouvant au-dessus des deuxièmes mangeoires.

7. Dispositif pour nourrir les animaux selon une des revendications précédentes, **caractérisé en ce que** des tampons de nourriture se trouvent entre les trous d'évacuation et les clapets.

8. Dispositif pour nourrir les animaux selon la revendication 7, **caractérisé en ce que** près du côté supérieur des tampons de nourriture se trouvent des ouvertures pour pouvoir injecter de l'eau pour le nettoyage.

9. Dispositif pour nourrir les animaux selon la revendication 8, **caractérisé en ce que** les ouvertures se trouvent dans la paroi latérale des tampons de nourriture près du côté supérieur des tampons de nourriture ou **en ce que** les ouvertures sont obtenues en laissant ouverts le côté supérieur des tampons de nourriture.

10. Dispositif pour nourrir les animaux selon une des revendications précédentes, **caractérisé en ce que** le dispositif pour nourrir les animaux comprend des verrous pour la fermeture complète ou partielle des trous d'évacuation.

11. Dispositif pour nourrir les animaux selon la revendication 10, **caractérisé en ce que** les trous d'évacuation dans le tuyau de nourriture se trouvent par paires l'un à côté de l'autre, où sous chaque paire de trous d'évacuation se trouve une mangeoire, et où chaque trou d'évacuation peut être fermé de façon indépendante à l'aide d'un verrou.

12. Dispositif pour nourrir les animaux selon une des revendications précédentes, **caractérisé en ce que** chaque clapet est fixé à un soufflet qui est raccordé à une conduite à vide.

13. Dispositif pour nourrir les animaux selon la revendication 12, **caractérisé en ce que** le dispositif pour nourrir les animaux comprend deux conduites à vide parallèles, où les premières mangeoires sont raccordées à l'une des conduites à vide et les deuxièmes mangeoires sont raccordées à l'autre conduite à vide.

14. Dispositif pour nourrir les animaux selon la revendication 13, **caractérisé en ce que** chaque mangeoire est pourvue de deux canaux ayant chacun deux extrémités auxquelles peuvent être raccordés des morceaux des conduites à vide, où l'un des canaux est pourvu entre ses extrémités d'une ouverture à laquelle est raccordé le soufflet et où les parois latérales entre les extrémités de l'autre canal sont fermées.
